Europäisches Patentamt

European Patent Office

Office européen des brevets

(19)

(11) Numéro de publication : **0 373 045 B1**

## (12) FASCICULE DE BREVET EUROPEEN

(45) Date de publication du fascicule du brevet :
**01.04.92 Bulletin 92/14**

(51) Int. Cl.$^5$ : **G01N 1/24**

(21) Numéro de dépôt : **89403321.6**

(22) Date de dépôt : **30.11.89**

(54) **Capteur individuel portatif pour recueillir une fraction déterminée des suspensions solides d'une atmosphère.**

(30) Priorité : **06.12.88 FR 8815974**

(43) Date de publication de la demande :
**13.06.90 Bulletin 90/24**

(45) Mention de la délivrance du brevet :
**01.04.92 Bulletin 92/14**

(84) Etats contractants désignés :
**AT BE CH DE ES GB GR IT LI LU NL SE**

(56) Documents cités :
**EP-A- 0 211 761**
**DE-C- 893 905**
**US-A- 4 461 183**
**ANN. OCCUP. HYG., vol. 21, 1978, pages 41-50, Pergamon Press, Londres, GB; T.L. OGDEN et al.: "An inhalable-dust sampler, for measuring the hazard from total airborne particulate"**

(73) Titulaire : **CHARBONNAGES DE FRANCE, Etablissement public dit:**
**Tour Albert 1er 65 avenue de Colmar**
**F-92507 Rueil Malmaison Cédex (FR)**

(72) Inventeur : **Fabries, Jean-François**
**159 Rue Charles III**
**F-54000 Nancy (FR)**
Inventeur : **Wrobel, Richard**
**6 Allée de Chambéry**
**F-54440 Liverdun (FR)**
Inventeur : **Gorner, Peter**
**14 Allée des Erables**
**F-54500 Vandoeuvre (FR)**

(74) Mandataire : **Robert, Jean-Pierre et al**
**CABINET BOETTCHER 23, rue la Boétie**
**F-75008 Paris (FR)**

Jouve, 18, rue Saint-Denis, 75001 PARIS

## Description

L'invention a pour objet un capteur individuel qu'une personne peut porter sur elle, servant à prélever dans l'atmosphère environnante une fraction des suspensions solides qu'elle contient sous forme d'aérosol, et à retenir cette fraction en vue d'analyses ultérieures.

On connaît déjà par le document FR-A-2.585.832, un dispositif conçu pour capter les particules d'un aérosol susceptibles d'être retenues par les alvéoles pulmonaires. Ces particules ne sont pas la totalité des particules présentes dans l'atmosphère mais celles, selon ce document, comprises dans une plage de dimensions précises (par exemple 5 à 0,5 micromètres) et ajustable, réputées être retenues par les alvéoles. L'appareil comporte donc des moyens complexes pour débarrasser l'aérosol des particules les plus grosses réputées ne pas être retenues par les alvéoles. Ces moyens comprennent d'une part des filtres en matière alvéolaire et des chicanes le long du trajet de l'aérosol aspiré dans le capteur, avant que l'aérosol ne parvienne à un dernier filtre qui simule les alvéoles pulmonaires, et qui servira de partie active du capteur puisque c'est son contenu qui sera analysé.

Ce capteur ne convient pas pour échantillonner la fraction dite thoracique de l'aérosol, c'est-à-dire la fraction de particules dont la nocivité n'est pas limitée aux alvéoles mais à une partie plus large de l'appareil respiratoire du porteur, qui englobe egalement la trachée et les bronches. Il s'agit des aérosols ayant en particulier un pouvoir irritant, allergissant ou toxique.

La fraction thoracique d'un aérosol est définie par une courbe, généralement admise au niveau international, qui indique la probabilité pour une particule de cet aérosol d'être retenue par la partie du système respiratoire concerné -et donc d'y créer un trouble- en fonction de la taille de cette particule. Il s'agit donc de concevoir un capteur qui, placé dans une atmosphère quelconque, recueille ce que les régions concernées des voies respiratoires recueilleraient, c'est-à-dire une population de particules répondant à la courbe admise.

Des essais modifiant le capteur connu, notamment en ce qui concerne les filtres mis en place et les trajets parcourus, n'ont pas permis d'obtenir de résultats satisfaisants.

L'invention en revanche, conservant aux capteurs connus les moyens d'aspiration et de retenue des particules à analyser, propose des moyens de sélection de ces particules à partir de l'aérosol ambiant, permettant de simuler le comportement de l'appareil respiratoire en présence d'un tel aérosol, tel que ce comportement soit conforme à la courbe susdite pour ce qui concerne la fraction de cet aérosol qu'il est susceptible de retenir.

A cet effet, l'invention a donc pour objet un capteur portatif individuel d'un échantillonnage déterminé de particules susceptibles d'être retenues dans la région thoracique, ayant, sur un corps, un couvercle d'axe général longitudinal avec un orifice central d'entrée d'air et au moins une sortie latérale d'air, une coupelle montée rotative autour dudit axe général à l'intérieur de ce couvercle et contenant une couronne en mousse filtrante à canal central d'arrivée d'air, un chapeau comportant une ouverture centrale formant chambre de sélection des particules de l'aérosol.

Selon une caractéristique principale de l'invention, l'orifice central d'entrée d'air est surmonté dans la chambre de sélection, d'un embout tubulaire borgne, communiquant avec la chambre par des orifices latéraux, la surface extérieure de cet embout au-dessus de sa partie tubulaire étant conique, la pointe étant dirigée vers l'ouverture centrale du chapeau, et de diamètre à la base supérieur au diamètre extérieur de la partie tubulaire dans laquelle sont ménagés les orifices.

Pour éviter un dépôt des particules pénétrant dans l'embout tubulaire, sur les parois internes de ce dernier, l'extrémité de l'évidement borgne de cet embout est situé au-delà des orifices latéraux par rapport à l'orifice central, et conique.

En outre, afin d'éviter les impacts et les dépôts sur la paroi interne de l'embout, il sera préférable de disposer les orifices latéraux, en nombre pair, diamétralement opposés deux à deux. De plus, en-dessous des orifices, l'embout présente une surface conique extérieure, s'évasant en direction opposée des orifices.

Afin de permettre le captage de différents échantillonnages de particules, l'embout est emmanché de manière amovible, pour pouvoir être remplacé par un autre embout du même type mais de caractéristiques différentes, sur un bossage central du couvercle dans lequel est ménagé l'orifice central d'entrée d'air. Enfin, il sera avantageux de recouvrir la surface annulaire du couvercle autour de l'embout d'un matériau de retenue des particules n'ayant pas pénétré dans ce dernier.

L'invention sera mieux comprise au cours de la description donnée ci-après à titre d'exemple purement indicatif qui permettra d'en dégager les avantages et les caractéristiques secondaires.

Il sera fait référence aux dessins annexés dans lesquels :

    – la figure 1 est une vue en élévation en coupe par un plan passant par l'axe général d'un capteur conforme à l'invention,

    – la figure 2 est une vue de détail de l'embout de sélection des particules mis en oeuvre dans l'invention.

Le capteur représenté a une structure analogue à celle du capteur décrit dans le document rappelé en préambule qui doit être considéré comme incorporé au présent texte par la citation qui en est faite. On ne décrira donc en détail que les moyens spécifiques à la présente invention en relation avec les pièces environnantes.

Un corps creux 1 contient un moteur 2 et des sources d'énergie électrique 3 en même temps qu'un circuit de régulation 4. L'arbre du moteur 2 sort du corps 1 à travers un palier 5 et porte, par son extrémité libre, une coupelle rotative 6, ouverte en direction opposée au corps 1. La face intérieure 7 du fond de cette coupelle 6 présente une protubérance centrale 8 à flanc incurvé concave se raccordant avec cette face intérieure 7. La face intérieure 9 de la paroi latérale de la coupelle 6 possède un épaulement circulaire 10 éloigné de la face inférieure du fond 7 qui contient une couronne 11 en mousse filtrante possédant un canal central 12. Il existe donc ainsi entre la face extrême 13 de la couronne 11 et la face interne 7 de la coupelle, un volume libre 14. La protubérance centrale 8 s'étend au-delà du plan de l'épaulement 10 de manière à pénétrer à l'intérieur du canal central 12.

L'ensemble de la coupelle 6 avec sa couronne en mousse 11 est enfermé dans un couvercle 15 qui se fixe au corps 1 de manière démontable. Ce couvercle 15 possède des orifices 16 de sortie d'air dans sa paroi latérale et dans sa paroi d'extrémité 17, un bossage 18 traversé par un orifice central d'entrée d'air 19.

Le corps 1 et le couvercle 15 ont un axe général longitudinal 20 confondus avec l'axe de rotation de la coupelle rotative 6, l'axe de la protubérance 8, de la couronne 11, du canal central 12 et de l'orifice central d'arrivée d'air 19.

Un chapeau 21 surmonte le couvercle 15, de manière amovible, pour déterminer une chambre de sélection 22 communiquant avec l'espace enfermé dans le couvercle 15 au moyen de l'orifice 19. Cette chambre 22 est ouverte sur l'atmosphère extérieure par un orifice 23 aménagé dans sa paroi d'extrémité et coaxial à l'axe 20. Cet orifice 23 est en réalité constitué d'une couronne d'orifices réalisée autour d'une partie pleine permettant à la tige 25 d'un capot 24 d'être fixée au chapeau 21. Le capot 24 protège cet orifice 23 d'une entrée d'air directe dans la chambre de sélection 22.

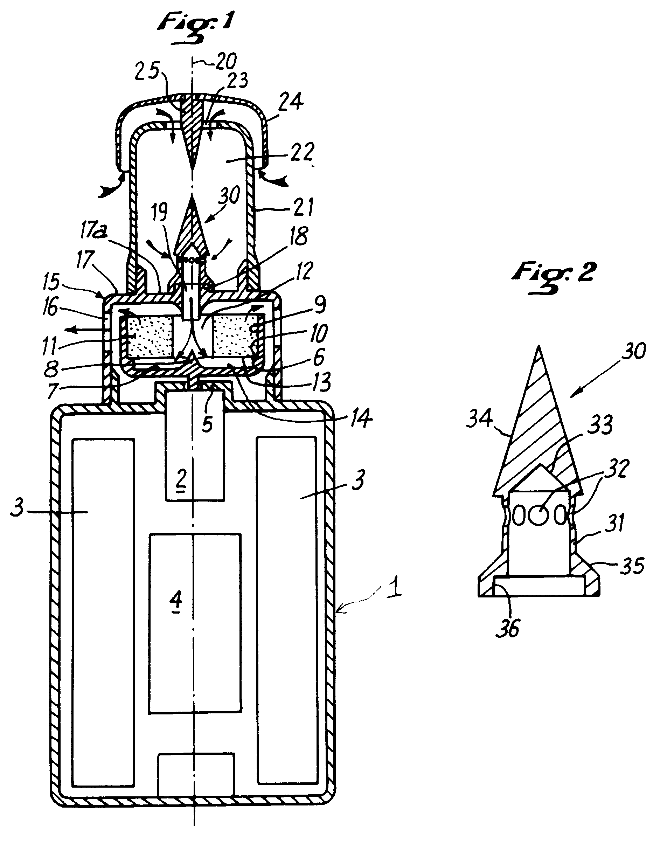

Le bossage 18 est surmonté à l'intérieur de la chambre de sélection 22 d'un embout tubulaire 30 représenté en coupe axiale sur la figure 2. Cet embout est principalement constitué par une partie cylindrique tubulaire 31 dont la paroi latérale est équipée d'orifices 32, l'évidement intérieur de cette partie tubulaire étant borgne et terminé par une surface conique 33 au-dessus des orifices 32. La surface extérieure 34 terminale de l'embout au-dessus de la partie tubulaire 31 est conique, la pointe étant dirigée vers l'orifice 23, et l'axe général de cet embout étant confondu lorsqu'il est monté, avec l'axe 20. La base de la surface conique 34 est de diamètre plus important que le diamètre extérieur de la partie cylindrique 31. La base de la partie cylindrique 31 se prolonge par une partie conique 35 divergeant vers le bas, qui permet d'éviter une accumulation des poussières à proximité des orifices 32. Un lamage 36 permet d'emmancher l'embout sur le bossage 18. Cet embout est réalisé en un matériau rigide non électrostatique, les surfaces intérieure et extérieure qu'il porte étant soigneusement polies. En outre, les orifices 32 seront de préférence en nombre pair et disposés de manière à être diamétralement opposés deux à deux de manière que les flux qui pénètrent par ces orifices dans l'embout se contrarient et empêchent les impacts de particules contre les parois de l'évidement intérieur.

Il faut également noter que le diamètre intérieur de la partie tubulaire 31 est égal au diamètre de l'orifice 19, de manière qu'il n'y ait pas de relief interne dans le canal de passage des particules de l'embout au canal central 12 de la mousse filtrante 11.

En fonctionnement, le moteur 2 entraîne en rotation la coupelle 6 qui fait fonction par effet centrifuge d'aspirateur pour l'atmosphère extérieure qui entre dans l'appareil par l'orifice 23 et en ressort par les orifices 16. Au niveau de l'embout 30, donc de la communication entre la chambre de sélection 22 et l'orifice central 19, il existe un gradient de vitesse au travers des orifices 32, donc radial par rapport à l'axe 20, alors que la direction générale de l'écoulement dans la chambre 22 est dans la direction de l'axe 20 et divergeant du fait de la surface conique 34. Il se produit donc, dans la chambre 22, au niveau des orifices 32, une déviation de flux permettant une certaine discrimination des particules, en fonction de leur inertie, donc de leurs dimensions, les plus lourdes et/ou les plus éloignées des orifices 32 ne pénétrant pas toutes à l'intérieur de l'embout. Ces particules qui ne pénétrent pas peuvent être piégées par la surface supérieure 17a du couvercle 15, surtout si cette dernière est recouverte d'un matériau capable de les retenir tel qu'un adhésif ou un revêtement à base de mousse. L'expérience montre que la discrimination ainsi obtenue correspond à l'échantillonnage que l'on désire recueillir dans la coupelle 6.

Tout en gardant une même forme générale à l'embout 30, on peut en modifier les dimensions et/ou l'angle du cône et/ou le nombre et le diamètre des trous de la partie cylindrique, c'est-à-dire pratiquement interchanger les embouts, pour obtenir des caractéristiques de sélection différentes.

A titre indicatif, l'embout selon l'invention a une hauteur d'environ 25 mm pour un diamètre de sa base égal à 10 mm et un diamètre intérieur de la partie tubulaire égal à 6 mm. Cet embout est disposé dans un capteur portatif dont la hauteur totale est d'environ 15 cm.

## Revendications

1. Capteur portatif individuel d'un échantillonnage déterminé de particules susceptibles d'être retenues dans la région thoracique ayant, sur un corps (1), un couvercle (15) d'axe général longitudinal (20) avec un orifice (19) central d'entrée d'air et au moins une sortie d'air latérale (16), une coupelle (6) montée rotative autour dudit axe général (20) à l'intérieur de ce couvercle (15) et contenant une couronne (11) en mousse filtrante à canal central d'arrivée d'air (12), un chapeau (21) comportant une ouverture centrale (23) et formant chambre de sélection des particules de l'aérosol, caractérisé en ce que l'orifice (19) central d'entrée d'air est surmonté, dans ladite chambre de sélection (22), d'un embout (30) tubulaire borgne communiquant avec la chambre (22) par des orifices latéraux (32), la surface extérieure (34) de cet embout (30) au-dessus de sa partie tubulaire (31) étant conique, de pointe dirigée vers l'ouverture centrale (23) du chapeau (21) et de diamètre à la base supérieur au diamètre extérieur de la partie tubulaire (31) dans laquelle sont ménagés les orifices (32).

2. Capteur selon la revendication 1, caractérisé en ce que l'extrémité de l'évidement borgne de l'embout (30) est terminé par une surface conique (33).

3. Capteur selon la revendication 1 ou la revendication 2, caractérisé en ce que les orifices latéraux (32) sont en nombre pair et diamétralement opposés deux à deux.

4. Capteur selon l'une quelconque des revendications précédentes, caractérisé en ce qu'en-dessous des orifices (32), l'embout (30) présente une surface conique extérieure (35) s'évasant à l'opposé de ces orifices (32).

5. Capteur selon l'une quelconque des revendications précédentes, caractérisé en ce que l'orifice (19) central d'entrée d'air est ménagé dans un bossage central (18) du couvercle (15), formant support pour l'emmanchement amovible de l'embout (30).

6. Capteur selon l'une quelconque des revendications précédentes caractérisé en ce que la surface annulaire (17a) du couvercle (15) autour de l'embout (30) est recouverte d'un matériau de retenue des particules.

## Patentansprüche

1. Tragbarer individueller Sammler zur Aufnahme einer bestimmten Probe von Teilchen, die geeignet sind, im Thorax-Bereich zurückgehalten zu werden, umfassend auf einem Gehäuse (1) einen Deckel (15) mit in Längsrichtung verlaufender Hauptachse (20), einer zentralen Lufteintrittsöffnung (19) und mit mindestens einem seitlichen Luftaustritt (16), eine Schale (6), die um die Hauptachse (20) drehbar innerhalb des Deckels (15) angeordnet ist und einen Kranz (11) aus Filterschaumstoff mit einem. zentralen Lufteintrittskanal (12) hat, eine Kappe (21) mit einer Mittelöffnung (23), die eine Selektionskammer für Aerosol-Teilchen bildet, dadurch **gekennzeichnet,** daß die zentrale Lufteintrittsöffnung (19) innerhalb der Selektionskammer (22) von einem rohrförmigen Blindstutzen (30) bedeckt ist, der über Seitenöffnungen (32) mit der Kammer in Verbindung steht, wobei die Außenfläche (34) dieses Stutzens (30) oberhalb seines rohrförmigen Abschnittes (31) konisch ist, mit zur Mittelöffnung (23) der Kappe (21) weisender Spitze und mit einem Basisdurchmesser, der größer als der Durchmesser des rohrförmigen Abschnittes (31) ist, in dem die Seitenöffnungen (32) ausgebildet sind.

2. Sammler nach Anspruch 1, dadurch **gekennzeichnet,** daß das abgeschlossene Hohlraumende des Blindstutzens (30) in einer Konusfläche (33) endet.

3. Sammler nach Anspruch 1 oder 2, dadurch **gekennzeichnet,** daß die Anzahl der Seitenöffnungen (32) geradzahlig ist und daß diese paarweise diametral einander gegenüber angeordnet sind.

4. Sammler nach einem der vorhergehenden Ansprüche, dadurch **gekennzeichnet,** daß der Blindstutzen (30) unterhalb der Öffnungen (32) eine konische Außenfläche (35) hat, die sich von diesen Öffnungen (32) weg aufweitet.

5. Sammler nach einem der vorhergehenden Ansprüche, dadurch **gekennzeichnet,** daß die zentrale Lufteintrittsöffnung (19) in einem zentralen Höcker (18) des Deckels (15) ausgebildet ist, der einen Träger für das lösbare Aufstecken des Blindstutzens (30) bildet.

6. Sammler nach einem der vorhergehenden Ansprüche, dadurch **gekennzeichnet,** daß die Ringfläche (17a) des Deckels (15) um den Blindstutzen (30) mit einem Rückhaltematerial für die Partikel bedeckt ist.

## Claims

1. An individual portable sensor for performing determined sampling of particles that may be retained in the chest region, the sensor having a body (1), a lid (15) on the body, the lid having a generally longitudinal axis (20) with a central air inlet orifice (19) and at least one lateral air outlet orifice (16), a cup (6) mounted to rotate about said general axis (20) inside said lid (15) and containing a ring (11) of filtering foam with a central air inlet channel (12), a cap (21) including a central opening (23) and forming a chamber for selecting particles from the aerosol, characterized in that the central air inlet orifice (19) is surmounted in said selection chamber (22) by a blind tubular end fitting (30) communicating with the chamber (22) via lateral orifices (32), the outside surface (34) of said end fitting (30) above its tubular portion (31) being conical in shape, with its tip being directed towards the central opening (23) of the cap (21) and having a base diameter which is greater than the outside diameter of the tubular portion (31) in which the orifices (32) are provided.

2. A sensor according to claim 1, characterized in that the end of the blind hole in the end fitting (30) is terminated in a conical surface (33).

3. A sensor according to claim 1 or 2, characterized in that the lateral orifices (32) are even in number and are diametrically opposite one another in pairs.

4. A sensor according to any preceding claim, characterized in that beneath the orifices (32), the end fitting (30) has an outside conical surface (35) which flares away from the orifices (32).

5. A sensor according to any preceding claim, characterized in that the central air inlet orifice (19) is provided through a central bushing (18) of the lid (15), thereby constituting a support on which the end fitting (30) can be placed removably.

6. A sensor according to any preceding claim, characterized in that the annular surface (17a) of the lid (15) arround the end fitting (30) is covered with a particle-retaining material.

*Fig.1*

*Fig.2*